# EUROPEAN PATENT APPLICATION

(11) **EP 4 467 299 A1**
(43) Date of publication of application: **27.11.2024**
(21) Application number: 24177095.7
(22) Date of filing: 21.05.2024
(51) Int. Cl.: B26D 1/00, B26F 1/24, B29B 11/16, C04B 35/565, C04B 35/634, C04B 35/80

(54) **METHOD AND TOOL FOR CHANNEL FORMATION IN FIBER PREFORMS**

(30) Priority: 23.05.2023 US 202363503831 P
(71) Applicant: RTX Corporation, Farmington, CT 06032 (US)
(72) Inventor: SUDRE, Olivier H., East Hartford, 06118 (US)
(74) Representative: Dehns

(57) **Abstract**

A tool (10) and method for forming a perforation through a fiber preform (14) includes a first and second tool components (16, 18). Coaxial holes (30, 46) of the first and second tool components (16, 18) receive a plunger assembly (20) that is translatable along the coaxial holes (46) to perforate the fiber preform (14). Opposing surfaces (42, 50) of the first and second tool components (16, 18) circumscribe respective holes (30, 46) and contact the fiber preform (14) during the perforation process.

## Description

### BACKGROUND

The present disclosure relates generally to ceramic matrix composite (CMC) components, and more particularly to a method of manufacturing ceramic matrix composite components for use in gas turbine engines.

Lightweight ceramic matrix composites (CMC) are highly desirable materials for gas turbine engine applications. CMCs, and particularly SiC/SiC CMCs (having silicon carbide matrix and fibers) exhibit excellent physical, chemical, and mechanical properties at high temperatures, making them particularly desirable for producing hot section components, including blade outer air seals (BOAS), vanes, blades, combustors, and exhaust structures. Like other materials, it can be critical to the performance, durability, and function of the CMC component to cool the CMC component to maintain appropriate operating temperatures.

CMCs can be manufactured by densifying a preform using a chemical vapor infiltration process that introduces a chemical reactant through preform pores, which are defined by a woven structure of fiber tows. During some manufacturing processes, these pores can become narrow making infiltration of the chemical reactant difficult. Manipulating tows to correct the pore shape may damage tows of the preform. Accordingly, additional tooling and methods for manipulating tows of the preform are desirable.

### SUMMARY

An example tool, according to this disclosure, includes a first tool component, a second tool component, and a plunger assembly. The first tool component includes a base, a stem extending from the base, and a first hole extending through the base and the first stem. At a distal end of the first stem opposite the base, the first stem includes a first surface circumscribing the first hole. The second tool component is spaced from the first tool component. The second tool component includes a second stem and a second hole extending through the second stem that is coaxial with the first hole. At an end of the second stem facing the first surface, the second stem includes a second surface circumscribing the second hole. The plunger assembly includes a piercing element received within the second hole and is translatable along a longitudinal axis of the second hole from a retracted position to an extended position. In the extended position, the piercing element extends into the first hole of the first component.

A method of perforating a fiber preform, according to this disclosure, includes placing a fiber preform in contact with the first surface of the first tool component. The method includes placing a second surface of the second tool component in contact with the fiber preform opposite the first tool component and aligning the second hole coaxially with the first hole of the first tool component. The method includes translating a piercing element of the plunger assembly from the retracted position, through the fiber preform into the first hole and retracting the piercing element to form a perforation.

Features of embodiments are set forth in the dependent claims.

### BRIEF DESCRIPTION OF THE DRAWINGS

FIG. 1A depicts an example tool for supporting a fiber preform during a perforation process with a plunger assembly in a retracted position.
FIG. 1B depicts the example tool with the plunger assembly in an extended position.
FIG. 1C depicts the example tool with the plunger assembly in the retracted position and perforation.
FIG. 2 is a flow chart describing a process for forming one or more perforations using the example tool.

### DETAILED DESCRIPTION

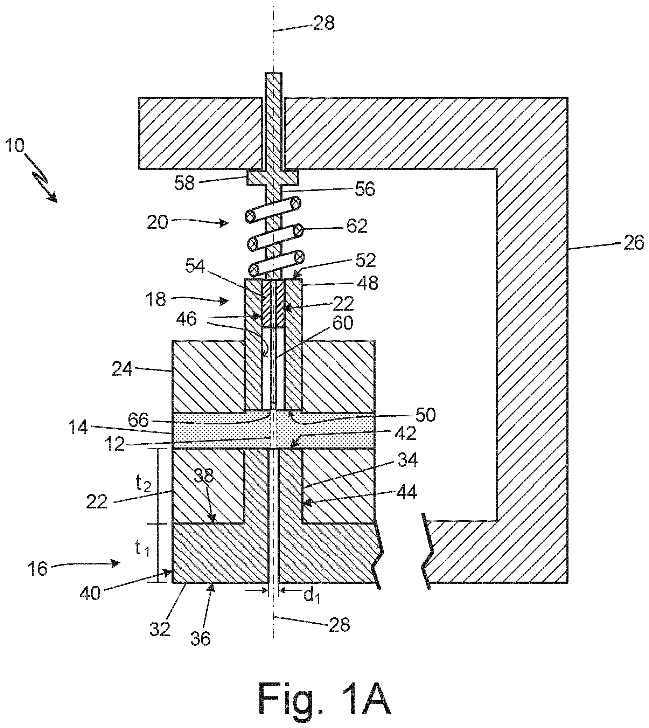

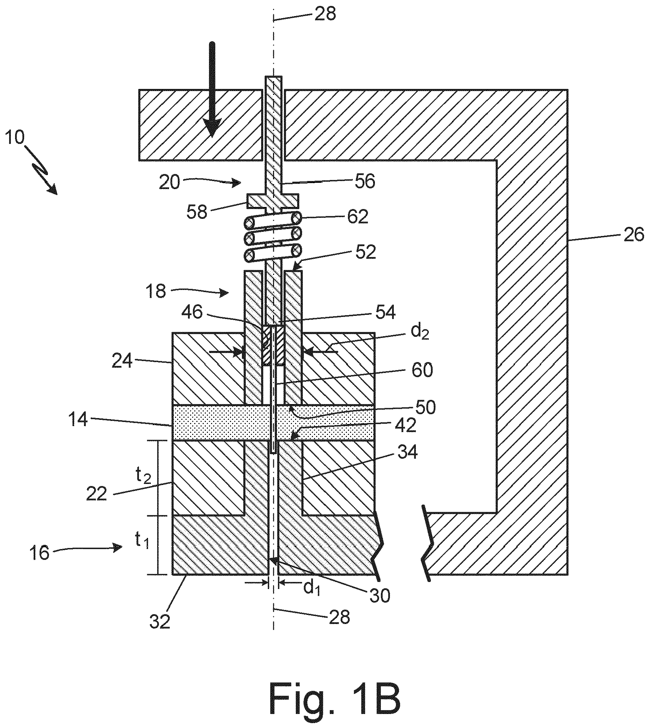

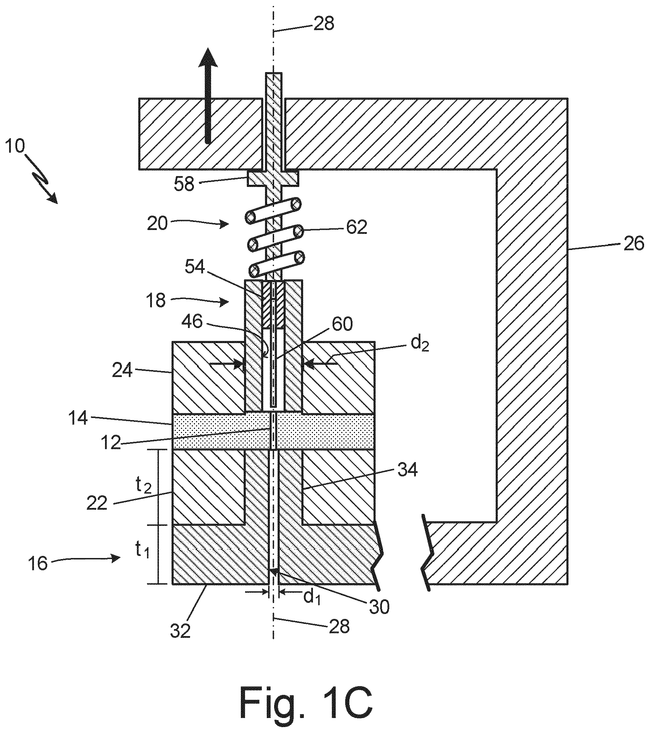

FIG. 1A, FIG. 1B, and FIG. 1C are schematics of tool 10, which depict an example sequence of forming perforation 12 in fiber preform 14. FIG. 1A depicts tool 10 in a retracted position prior to forming perforation 12. FIG. 1B depicts tool in an extended position while forming perforation 12 and FIG. 1C depicts tool 10 in the retracted position after forming perforation 12. FIG. 1A, FIG. 1B, and FIG. 1C are discussed together below.

Tool 10 includes first tool component 16, second tool component 18, and plunger assembly 20. In some examples tool 10 can include first support member 22 and second support member 24. In other examples, tool 10 can include support frame 26. Fiber preform 14 is retained between first tool component 16 and second tool component 18. Actuating plunger assembly 20 along longitudinal axis 28 of tool 10 forms perforation 12 through fiber preform 14.

First tool component 16 includes hole 30 that extends through the body of first tool component 16. Hole 30 extends along and is concentric with longitudinal axis 28. Hole 30 defines an opening through first tool component 16 and provides clearance for components of plunger assembly 20 in the extended position. Example cross-sections of hole 30 include circular, ovular, elliptical, rectangular, square-shaped, triangular, and diamond-shaped taken normal to longitudinal axis 28. In one example, hole 30 has a circular cross-section and defines a cylindrical bore through first tool component 16.

The body of first tool component 16 includes base 32 and, in some examples, stem 34. Longitudinal axis 28 can be oriented normal to base 32 as shown in FIG. 1A, 1B, and 1C or at an oblique angle to base 32.

Base 32 is defined by surface 36 and surface 38 which are spaced from each other by thickness t1. Surface 36 can be configured to abut an opposing surface of a fixed interface while surface 38 can be configured to abut a complimentary surface of fiber preform 14, or a complimentary surface of first support member 22 in certain examples. Base 32 can include side surfaces 40, which extend from surface 36 to surface 38. First tool component 16 is fixed in three-dimensional space via engagement with one or more surfaces of base (e.g., one or more of surface 36, surface 38, and side surfaces 40), via one or more fasteners (not shown) extending through base 32 affixing first tool component 16 to a fixed machine interface, or a combination of surface engagement and fastener attachment.

Stem 34, when present, extends away from base 38, and hole 30 extends through base 32 and stem 34. At a distal end of stem 34 opposite base 32, stem 34 includes surface 42. Outer periphery 44 of stem 34 extends from base 32 to surface 42. In the example depicted by FIG. 1A, 1B, and 1C, outer periphery 44 of stem 34 is concentric to hole 30 and longitudinal axis 28 while surface 42 has an annular cross-section normal to longitudinal axis 28.

Second tool component 18 includes hole 46 extending therethrough that is aligned with hole 30 of first tool component 16 when second tool component 18 is assembled with first tool component 16. The body of second tool component 18 can take the form of a plate, a bar, a cylinder, a pipe, a tube, or other body. As depicted in FIG. 1A, 1B, and 1C, second tool component 18 includes stem 48, which is configured as a cylindrical body with hole 46 extending through stem 48 concentrically with longitudinal axis 28. Stem 48 includes, at opposite ends thereof, surface 50 abutting fiber preform 14 and surface 52 engaging components of plunger assembly 20.

First tool component 16 and second tool component 18 can be formed of a material such as carbon, for example, graphite. First tool component 16 and second tool component 18 can be cast and/or machined with conventional methods and removed without damage to fiber preform 14. Each of first and second tool components 16 and 18 can be formed from multiple components.

Plunger assembly 20 includes collet 54, shaft 56, flange 58, piercing element 60, and biasing element 62. Outer periphery 64 of collet 54 conforms to and is guided by hole 46. In some examples, collet 54 and hole 46 define a linear bearing or bushing such that collet 54 translates along longitudinal axis 28 while second tool component 18 restrains collet 54, and hence plunger assembly 20, in a radial direction relative to longitudinal axis 28.

Received within collet 54 is piercing element 60. Piercing element 60 can be a needleshaped protrusion that includes tip 66 located at a distal end of piercing element 60 relative to collet 54. Tip 66 of piercing element 60 can be conical or wedge-shaped shaped acting to part adjacent fibers or tows of when plunger assembly 20 translates from the retracted position (FIG. 1A) to the extended position (FIG. 1B). In other examples, tip 66 of piercing element 60 can be rounded or hemispherical to part adjacent fibers of preform 14 during hole formation.

Shaft 56 extends from collet 54 opposite piercing element 60 while flange 58 extends radially with respect to shaft 56. Surface 52 of second tool component 18 and flange 58 retain biasing element 62 in the direction of longitudinal axis 28. Examples of biasing element 62 include a helical spring or other elastomeric plate, cylinder, or bushing. As plunger assembly 20 moves from the retracted position (FIG.1A) towards the extended position (FIG. 1B), a distance "m" between flange 58 and surface 52 is reduced and thereby compresses biasing element 62. Compression of biasing element 62 produces a restoring force that acts to separate plunger assembly 20 from second tool component 18. Accordingly, biasing element 62 acts on plunger assembly 20 any time plunger assembly 20 displaces longitudinally towards second tool component 18. The restoring force produced by biasing element 62 tends to displace flange 58 away from surface 52 and, as such, tends to displace plunger assembly 20 from an extended (FIG. 1B) or partially extended position towards a retracted position (FIG. 1C).

Hole 30 has diameter d1 that is smaller than diameter d2 of hole 46. Diameter d2 of hole 46 is sized to accommodate collet 54 of plunger assembly 20. Diameter d1 of hole 30 is minimized relative piercing element 60 in order to maximize support of fiber preform 14 while allowing clearance to piercing element 60. Clearance between first tool component 16 and piercing element 60 reduces potential for binding during hole formation.

Interposed between first tool component 16 and second tool component 18 is fiber preform 14. Fiber preform 14 is constructed from ceramic fibers and/or tows, which can be woven, nonwoven, braided, or selectively placed. For example, fiber preform 14 can be formed from a plurality of unidirectional or two-dimensional woven fiber plies or sheets. In other examples, fiber preform 14 can be formed from a three-dimensional weave. In some examples, fiber preform 14 can additionally include fabric filler materials, e.g., "noodles", and/or chopped fibers. Fiber preform 14 can be formed on or around first tool component 16. For example, first tool component 16 can be a shape of an airfoil core and fiber preform 14 can be wrapped around first tool component 16 to form an airfoil. In other examples, fiber preform 14 can form a panel (e.g., combustor panel) or segment member such as a blade outer air seal. It should be appreciated that the disclosed method is not limited to aerospace components and can be applied in other fiberreinforced composite applications. Fiber preform 14 can be assembled separately from first and second tool components 16 and 18 and placed into first and second tool components 16 and 18 prior to densification. In other examples, fiber preform 14 can be formed directly on first tool component 16 (e.g., by braiding fiber tows or wrapping fiber plies around a surface of first tool component 16 or by fiber layup directly on a surface of first tool component 16). In some examples, fiber preform 14 can include a tackifier to help retain a shape of fiber preform 14 on first tool component 16. The tackifier material can be burned out prior to or during a densification process. Fiber materials can comprise a material stable at temperatures about 1000 degrees Celsius. Fiber materials can include, for example, silicon carbide (SiC), carbon (C), silicon oxycarbide (SiOC), silicon nitride (Si₃N₄), silicon carbonitride (SiCN), hafnium carbide (HfC), tantalum carbide (TaC), silicon borocarbonitride (SiBCN), zirconia, alumina, and silicon aluminum carbon nitride (SiAlCN).

The techniques disclosed herein are especially useful to reducing or eliminating damage to preforms with fibers arranged generally transverse or perpendicularly to longitudinal axis 28 such plunger assembly 20 tends to part fibers of preform 14 during hole formation rather than breaking or fraying fibers of preform 14. Further, first tool component 16 and second tool component 18 support surface plies of preform 14 to counter surface friction between preform 14 and plunger assembly 20. Accordingly, first tool component 16 and second tool component 18 prevent excessive deformation of the surface plies while allow clean entry and retraction of plunger assembly 20. Additionally, excessive deformation of the surface plies may encourage higher matrix deposition local to the perforation that creates a bulge. By contrast, first tool component 16 and second tool component 18 reduce or eliminate excessive deformation in the vicinity of perforations and thereby produces a preform surface devoid of bulges at perforation location.

Tool 10 retains fiber preform 14 by clamping first tool component 16 together with second tool component 18. In the depicted example, surface 42 of first tool component 16 and surface 50 of second tool component 18 abut opposite sides of fiber preform 14, thereby clamping fiber preform 14 between first tool component 16 and second tool component 18. While clamped, fiber preform 14 is restrained from displacement along longitudinal axis 28 by surface 42 and surface 50 and restrained radially with respect to longitudinal axis 28 by friction between fiber preform 14 and surface 42 of first tool component 16 and between fiber preform 14 and surface 50 of second tool component 18.

In some examples, tool 10 includes first support member 22 between fiber preform 14 and first tool component 16. First support member 22 can be a plate or block of material with a thickness t2 approximately equal to the distance between surface 42 of stem 34 and surface 38 of base 32 (i.e., the stem offset distance). In some examples, thickness t2 is less than the stem offset distance such first support member 22 limits deflection of fiber preform as a result of transverse force from plunger assembly 20 during hole formation. In other examples, thickness t2 is greater than or equal to the stem offset distance to provide additional clamping force in cooperation with second tool component 18, or second support member 24, when present. Second support member 24 is positioned on top of fiber preform 14 opposite first support member 22. First support member 22 and second support member 24 can be reusable or disposable components that are retained to first tool component 16 and second tool component 18, respectively. In other examples, first support member 22 and second support member 24 may be joined together with or without imposing a clamping force on to fiber preform 14. First support member 22 and second support member 24 can be used for perforating preform 14 and subsequently removed prior to densification. In other examples, first support member 22 and second support member 24 can be constructed from a material suitable for members 22 and 24 to remain with preform 14 during densification (e.g., graphite).

In some examples, tool 10 can include support frame 26. Support frame 26 can be one or more plates, beams, spars, or other structural members arranged to affix first tool component 16 relative to second component 18, or affix first tool component 16 relative to second tool component 18 and plunger assembly 20. In some examples, support frame 26 can include a robotic arm configured to position tool 10 relative to fiber preform 14. After perforating fiber preform 14, the robotic arm may reposition relative to fiber preform 14 to perforate a different region of preform 14, or to retract tool 10 relative to fiber preform 14.

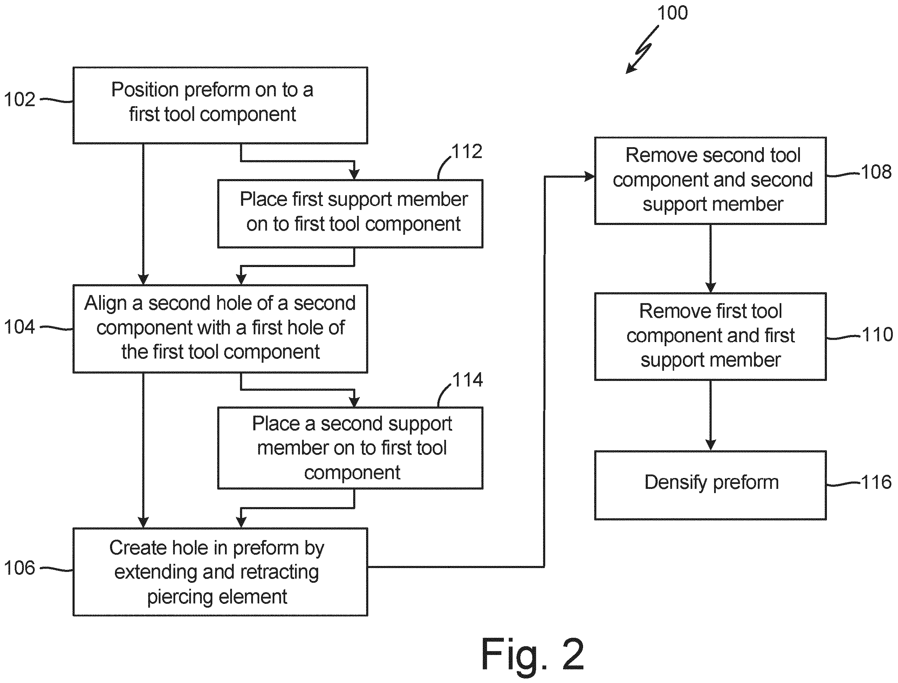

FIG. 2 is a flowchart describing method 100 for forming perforation 12 through fiber preform. Method 100 includes steps 102, 104, 106, and 108. In some instances, method 100 can include one or more of steps 110, 112, 114, and 116. The sequence depicted is for illustrative purposes only and is not meant to limit the method 100 in any way as it is understood that the portions of the method can proceed in a different logical order, additional or intervening portions can be included, or described portions of the method can be divided into multiple portions, or described portions of the method can be omitted without detracting from the described above.

In step 102, an operator positions fiber preform 14 on to first tool component 16. An operator can be personnel trained to use tool 10. In other instances, operator can be a machine and processing unit programmed to preform steps of method 100. Positioning of fiber preform 14 includes aligning a region of fiber preform 14 with longitudinal axis 28 and hole 30 of first tool component 16 (i.e., a first hole). The region of fiber preform 14 corresponds to an area of fiber preform through which perforation 12 is desired. The region may correspond to an area of fiber preform 14 targeted for improved densification uniformity and through-thickness penetration.

During step 104, the operator aligns hole 46 of second tool component 18 (i.e., a second hole) with hole 30 of first tool component 16 (i.e., the first hole). Further, the operator secures second tool component 18 with respect to first tool component 16 such that fiber preform 14 is retained between first tool component 16 and second tool component 18. For example, a side of fiber preform 14 can be placed in contact with surface 42 of stem 34 (i.e., the first tool component) and an opposite side of fiber preform 14 can be placed in contact with surface 50 of stem 48 (i.e., the second tool component 18).

At step 106, the operator actuates plunger assembly 20 to create perforation 12 through fiber preform 14. Actuating plunger assembly 20 can include applying a force to shaft 56 along longitudinal axis 28 to compress biasing member 62. As biasing member 62 compresses, plunger assembly 20 moves from a retracted position (FIG. 1A) towards the extend position (FIG. 1B). As plunger assembly 20 advances, piercing element 60, collet 54, shaft 56, and flange 58 are guided along longitudinal axis 28 by hole 42 until piercing element 60 punctures fiber preform 14 and extends into hole 30 of first tool component 16. Thereafter, the operator retracts plunger assembly 20 until piercing element 60, collet 54, shaft 56, and flange 58 are returned to the retracted position (FIG. 1C).

Step 106 can be repeated multiple times to create an array or pattern of perforations 12 through fiber preform 14. Perforations 12 of the array or pattern can be uniformly distributed or non-uniform such that inter-hole spacing varies across the surface of fiber preform 14.

Tool removal can include removing one or more of first tool component 16, second tool component 18, and plunger assembly 20 from fiber preform 14 in steps 108 and 110. In step 108, second tool component 18 and plunger assembly 20 are removed from tool 10. In step 110, the first tool component 16 is removed from fiber preform 14. In some examples, fiber preform 14 is completely removed from tool 10. In other examples, some components of tool 10 are removed while other components are retained to support fiber preform 14 during a densification process. For example, second tool component 18 and plunger assembly 20 can be removed while first tool component 16 remains to support fiber preform 14.

In certain examples, method 100 includes one or both of steps 112 and 114. In step 112, first support member 22 is placed on to first tool component 16 prior to fiber preform 14. Thereafter when fiber preform 14 is placed on to first tool component 16, first support member 22 is disposed between base 32 of first tool component 16 and fiber preform 14. In step 114, second support member 24 is placed on to fiber preform 14 and second tool component 18 opposite first support member 22 and first tool component 16. Second support member 24 can be secured relative to and/or by second tool component 18 such that fiber preform 14 is supported by first support member 22 and second support member 24. Examples incorporating first support member 22 and second support member 24 may remove first support member 22, second support member 24, or both support members in step 108 and step 110 respectively. In other examples, one or both of first support member 22 and second support member 24 are retained to support fiber preform 14 during densification.

In step 116, fiber preform 14 undergoes matrix formation and densification within a reaction chamber using a chemical vapor infiltration (CVI). Holes 12 formed in fiber preform 14 provide reactant vapors increased access interior layers of fiber preform 14 relative to an unperforated fiber preform. During densification, the fabric layers of preform 14 are infiltrated by the reactant vapors, and a gaseous precursor deposits on the underlying fibers. The matrix material can be SiC or other suitable ceramic material. Densification is carried out until the resulting ceramic matrix composite (CMC) has reached the desired residual porosity.

Because of perforations 12 in fiber preform 14, the matrix can deposit in an inside-out manner, referring directionally from the midplane to an outer surface of preform 14. Perforations 12 reduce "canning off' of the preform region near the midplane, where the matrix deposits too quickly near the outer surface of the preform and prevents vapors from accessing the midplane region. This can lead to asymmetrical densification with an undesirably porous midplane region compared to sufficiently densified outer surfaces.

### Discussion of Possible Embodiments

The following are non-exclusive descriptions of possible examples of the present invention.

Method of forming perforations in a fiber preform.

A method of forming a perforation in a fiber preform of a ceramic matrix composite includes, among other possible steps, placing the fiber preform in contact with a first surface of a first tool component. The first tool component further includes a base, a first stem extending from the base, and a first hole extending through the first stem and the base in which the first surface circumscribes the first hole. The method further includes placing a second surface of a second tool in contact with the fiber preform opposite the first tool component such that the fiber preform is disposed between the first tool component and the second tool component. The second tool component further includes a second stem and a second hole extend through the second stem in which the second surface circumscribes the second hole. The method further includes extending a piercing element of a plunger assembly along the second hole and through the fiber preform into the first hole to form a perforation through the fiber preform. The method includes retracting the piercing element of the plunger assembly in which the first surface and the second surface support the fiber preform.

The method of the preceding paragraph can optionally include, additionally and/or alternatively, any one or more of the following steps, features, configurations and/or additional components.

A further example of the foregoing method can further include forming an array of perforations in the fiber preform.

A further embodiment of any of the foregoing methods, wherein forming an array of perforations can include repositioning the fiber preform such that an unperforated region of the fiber preform is in contact with the first surface of the first tool component.

A further embodiment of any of the foregoing methods, wherein forming an array of perforations can include pacing the second surface of the second tool component in contact with the unperforated region of the fiber preform opposite the first tool component such that the second hole is coaxial with the first hole.

A further embodiment of any of the foregoing methods, wherein forming an array of perforations can include extending the piercing element of a plunger assembly along the second hole and through the unperforated region of the fiber preform and into the first hole to perforate the fiber preform.

A further embodiment of any of the foregoing methods, wherein the array of perforations is uniformly distributed within a perforated region of the fiber preform.

A further embodiment of any of the foregoing methods can include densifying the fiber preform within a reaction chamber by exposing the fiber preform to a gaseous reactant.

A further embodiment of any of the foregoing methods can include placing a first support member in contact with the base before placing the fiber preform on the first surface.

A further embodiment of any of the foregoing methods, wherein placing the fiber preform on the first surface places the fiber preform in contact with the first support member.

A further embodiment of any of the foregoing methods can include placing a second support member in contact with the fiber preform opposite the first support member.

A further embodiment of any of the foregoing methods an include densifying the fiber preform within a reaction chamber by exposing the fiber preform to a gaseous reactant in which the first support member and the second support member abut the preform during densification.

A further embodiment of any of the foregoing methods can include securing the second support member to the second tool member.

A further embodiment of any of the foregoing methods, wherein extending the piercing element can include guiding a collet of the plunger assembly along the second hole.

A further embodiment of any of the foregoing methods, wherein an outer periphery of the collet can form a sliding bearing with the second hole.

A further embodiment of any of the foregoing methods, wherein the piercing element can be received within the collet.

A further embodiment of any of the foregoing methods can include securing the second tool component relative to the first tool component with a support frame.

A further embodiment of any of the foregoing methods, wherein a first diameter of the first hole can be smaller than a second diameter of the second hole.

Tool for forming a perforation in a fiber preform.

A tool for forming a perforation in a fiber preform of a ceramic matrix composite component includes, among other possible steps, a first tool component, a second tool component spaced from the first tool component, and a plunger assembly. The first tool component includes a base, a first stem, a first hole, and a first surface. The first stem extends outward from the base. The first hole extends through the base and the first stem. The first surface is disposed at the end of the first stem opposite the base and circumscribes the first hole. The second tool component includes a second stem and a second hole. The second hole extends through the second stem coaxially with the first hole. The first diameter is less than the second diameter. The plunger assembly includes a collet and a piercing element. The collet is longitudinally guided by the second component along the second hole. The outer periphery of the collet conforms to the first diameter. The piecing element is received in the collet. The plunger assembly has an extended position in which the piercing element protrudes into the first hole and a retracted position in which the piercing element is entirely within the second hole.

The tool of the preceding paragraph can optionally include, additionally and/or alternatively, any one or more of the following features, configurations and/or additional components.

A further example of the foregoing tool can further include a first support plate having a first face abutting the base of the first tool component and a second face spaced from the first face and aligned with an end of the first stem.

A further example of any of the foregoing tools can include a second support plate spaced from the first support plate by a distance configured to retain the fiber preform.

A further example of any of the foregoing tools can include a shaft extending from the collet.

A further example of any of the foregoing tools can include a flange extending outward from the shaft.

A further example of any of the foregoing tools can include a biasing member disposed between the flange and the second stem.

A further example of any of the foregoing tools, wherein as the plunger assembly displaces from the retracted position towards the extended position, the biasing member can compress and thereby generate a restoring force that acts on the flange and the second stem to bias the plunger assembly towards the retracted position.

A further example of any of the foregoing tools, wherein an outer periphery of the first stem can coincide with an outer periphery of the second stem.

A further example of any of the foregoing tools, wherein the first stem and the second stem can be tubular.

A further example of any of the foregoing tools can include a support frame that retains the first tool component in fixed relationship to the second tool component.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a perforation (12) in a fiber preform (14) of a ceramic matrix composite, the method comprising:
placing the fiber preform (14) in contact with a first surface (42) of a first tool component (16), the first tool component (16) further comprising:
a base (32);
a first stem (34) extending from the base (32); and
a first hole (30) extending through the first stem (34) and the base (32), wherein the first surface (42) circumscribes the first hole (30);
placing a second surface (50) of a second tool component (18) in contact with the fiber preform (14) opposite the first tool component (16) such that the fiber preform (14) is disposed between the first tool component (16) and the second tool component (18), wherein the second tool component (18) further comprises:
a second stem (48); and
a second hole (46) extending through the second stem (48), wherein the second surface (50) circumscribes the second hole (46), and wherein the second hole (46) is coaxial with the first hole (30); and
extending a piercing element (60) of a plunger assembly (20) along the second hole (46) and through the fiber preform (14) into the first hole (30) to form a perforation (12) through the fiber preform (14); and
retracting the piercing element (60) of the plunger assembly (20), wherein the first surface (42) and the second surface (50) support fiber preform (14).

2. The method of claim 1, further comprising:
forming an array of perforations (12) in the fiber preform (14), wherein forming the array of perforations (12) includes:
repositioning the fiber preform (14) such that an unperforated region of the fiber preform (14) is in contact with the first surface (42) of the first tool component (16);
placing the second surface (50) of the second tool component (18) in contact with the unperforated region of the fiber preform (14) opposite the first tool component (16) such that the second hole (46) is coaxial with the first hole (30); and
extending the piercing element (60) of the plunger assembly (20) along the second hole (46) and through the unperforated region of the fiber preform (14) and into the first hole (30) to perforate the fiber preform (14).

3. The method of claim 2, wherein the array of perforations (12) is uniformly distributed within a perforated region of the fiber preform (14).

4. The method of any preceding claim, further comprising:
densifying the fiber preform (14) within a reaction chamber by exposing the fiber preform (14) to a gaseous reactant.

5. The method of any preceding claim, further comprising:
placing a first support member (22) in contact with the base (32) before placing the fiber preform (14) on the first surface (42), wherein placing the fiber preform (14) on the first surface (42) places the fiber preform (14) in contact with the first support member (22).

6. The method of claim 5, further comprising:
placing a second support member (24) in contact with the fiber preform (14) opposite the first support member (22).

7. The method of claim 6, further comprising:
densifying the fiber preform (14) within a or the reaction chamber by exposing the fiber preform (14) to a or the gaseous reactant, wherein the first support member (22) and the second support member (24) abut the preform (14) during densification.

8. The method of claim 6 or 7, further comprising:
securing the second support member (24) to the second tool component (18).

9. The method of any preceding claim, wherein extending the piercing element (60) includes:
guiding a collet (54) of the plunger assembly (20) along the second hole (46), wherein an outer periphery (64) of the collet (54) forms a sliding bearing with the second hole (46), and wherein the piercing element (60) is received within the collet (54).

10. The method of any preceding claim, further comprising:
securing the second tool component (18) relative to the first tool component (16) with a support frame (26).

11. The method of any preceding claim, wherein a first diameter (d1) of the first hole (30) is smaller than a second diameter (d2) of the second hole (46).

12. A tool (10) for forming holes (12) in a fiber preform (14) of a ceramic matrix composite component, the tool (10) comprising:
a first tool component (16), the second tool component (18) comprising:
a base (32); and
a first stem (34) extending outward from the base (32);
a first hole (30) extending through the base (32) and the first stem (34), wherein the first hole (30) has a first diameter (d1); and
a first surface (42) at an end of the first stem (34) opposite the base (32), wherein the first surface (42) circumscribes the first hole (30);
a second tool component (18) spaced from the first tool component (16), the second tool component (18) comprising:
a second stem (48); and
a second hole (46) extending through the second stem (48) coaxially with the first hole (30), wherein the second hole (46) has a second diameter (d2), wherein the first diameter (d1) is less than the second diameter (d2);
a plunger assembly (20) comprising:
a collet (54) longitudinally guided by the second tool component (18) along the second hole (46), wherein an outer periphery (64) of the collet (54) conforms to the first diameter (d1); and
a piercing element (60) received within the collet (54), wherein the plunger assembly (20) has an extended position in which the piercing element (60) protrudes into the first hole (30) and a retracted position in which the piercing element (60) is entirely within the second hole (46).

13. The tool of claim 12, further comprising:
a first support plate (22) having a first face abutting the base (32) of the first tool component (16) and a second face spaced from the first face and aligned with an end of the first stem (34).

14. The tool of claim 13, further comprising:
a second support plate (24) spaced from the first support plate (22) by a distance configured to retain the fiber preform (14).

15. The tool of any of claims 12 to 14, further comprising:
a shaft (56) extending from the collet (54);
a flange (58) extending outward from the shaft (56); and
a biasing member (62) disposed between the flange (58) and the second stem (48), wherein as the plunger assembly (20) displaces from the retracted position towards the extended position, the biasing member (62) compresses and thereby generates a restoring force that acts on the flange (58) and the second stem (48) to bias the plunger assembly (20) towards the retracted position.
